# EUROPÄISCHE PATENTSCHRIFT

(11) **EP 1 926 776 B1**
(45) Veröffentlichungstag und Bekanntmachung des Hinweises auf die Patenterteilung: **14.11.2012**
(21) Anmeldenummer: 06805739.7
(22) Anmeldetag: 16.09.2006
(51) Int. Cl.: C08L 23/16, C08L 53/02, C08L 83/04

(54) **VERWENDUNG EINES KAUTSCHUKCOMPOUNDS ALS MATERIAL IM EINSATZBEREICH DER BRENNSTOFFZELLE**
USE OF A RUBBER COMPOUND AS A MATERIAL IN THE INSERTION AREA OF FUEL CELLS
UTILISATION D'UN COMPOSE DE CAOUTCHOUC COMME MATERIAU DANS LE DOMAINE DES PILES A COMBUSTIBLE

(30) Priorität: 21.09.2005 DE 102005045167
(43) Veröffentlichungstag der Anmeldung: 04.06.2008
(73) Patentinhaber: Carl Freudenberg KG, 69469 Weinheim (DE)
(72) Erfinder: ADLER, Matthias, 64646 Heppenheim (DE); BIERINGER, Ruth, 64668 Rimbach (DE); VIOL, Michael, 69121 Heidelberg (DE)
(86) Internationale Anmeldenummer: PCT/EP2006/009036
(87) Internationale Veröffentlichungsnummer: WO 2007/033802

(56) Entgegenhaltungen:
- EP-A1- 1 075 034
- EP-A1- 1 277 804
- JP-A- 2005 068 268
- US-B2- 6 743 862

## Beschreibung

### Technisches Gebiet

Die Erfindung betrifft die Verwendung eines Kautschukcompounds als Material im Einsatzbereich der Brennstoffzelle.

### Stand der Technik

Das Dokument EP 1 075 034 A1 beschreibt die Anwendung von Polyisobutylen oder Perfluoropolyether, der über Hydrosilylierung vernetzt, als Dichtungsmaterial in der Brennstoffzelle.

Das Dokument JP 2005 068268 A offenbart Organopolysiloxane bzw. Silikonkautschuke für optische Materialien.

Das Dokument US 6,743,862 B2 offenbart eine vernetzbare Kautschukkomposition, vorzugsweise aus Ethylen-Propylen-Dien-Monomer, mit einer mindestens zwei SiH-Gruppen enthaltenden Verbindung sowie optional mit einem Platinkatalysator und beschreibt dessen Verwendung als Dichtungsmaterial.

Aus dem Dokument EP 1 277 804 A1 sind Kompositionen bekannt aus einem Vinylpolymer mit zumindest einer über Hydrosilylierung vernetzbaren Alkenylgruppe, einer Verbindung mit einer hydrosilylgruppenhaltigen Komponente, einem Hydrosilylierungskatalysator sowie einer aliphatischen ungesättigten Verbindung mit einem Molekulargewicht von nicht größer als 600 g/mol.

Beim Vernetzen eines Kautschuks über Hydrosilylierung sind endständige Doppelbindungen entscheidend. Es entstehen beim Vernetzen keine unerwünschten Spaltprodukte, die migrieren könnten. Folglich eignen sich diese Kautschukkompositionen meist für Anwendungen, bei denen es besonders auf eine saubere Umgebung ankommt, wie zum Beispiel in Brennstoffzellen, im medizinischen Bereich oder im Bereich von Lebensmittelverpackungen.

Weiterhin ist eine Verbesserung der mechanischen Eigenschaften der verwendeten Kautschuktypen, insbesondere in Bezug auf Zugfestigkeit, Bruchdehnung und/oder Druckverformungsrest (DVR), wünschenswert, um den besonderen Belastungen in den genannten Anwendungsbereichen gerecht zu werden.

Bisher wurde eine Reduktion des Druckverformungsrests (DVR) durch eine Erhöhung der Vernetzungsdichte erreicht. Dies führt zu einer Zunahme der Härte. Allerdings nimmt dabei oft die Bruchdehnung ab, was in vielen Anwendungen zu Problemen führt.

### Darstellung der Erfindung

Der Erfindung liegt die Aufgabe zu Grunde, die Verwendung eines Kautschukcompounds vorzuschlagen, mit dem eine Verbesserung der mechanischen Eigenschaften von Kautschuken, insbesondere eine Erhöhung der Bruchdehnung und/oder der Zugfestigkeit und/oder der Weiterreißfestigkeit bei gleichzeitiger Reduktion des Druckverformungsrests (DVR), erreicht wird.

Die Lösung der gestellten Aufgabe wird mit den Merkmalen des Anspruchs 1 erreicht.

Für die Verwendung im Einsatzbereich der Brennstoffzelle umfasst das Kautschukcompound erfindungsgemäß einen Kautschuk (A) mit mindestens zwei über Hydrosilylierung vernetzbaren funktionellen Gruppen, als Vernetzer (B) ein Hydrosiloxan oder Hydrosiloxanderivat oder ein Gemisch aus mehreren Hydrosiloxanen oder -derivaten, die im Mittel mindestens zwei SiH-Gruppen pro Molekül aufweisen, ein Hydrosilylierungs-Katalysatorsystem (C), mindestens einen Füllstoff (D) und ein über Hydrosilylierung vernetzbares Coagens (E).

Die Unteransprüche stellen vorteilhafte Weiterbildungen des Erfindungsgegenstandes dar.

In bevorzugter Ausgestaltung umfasst das Kautschukcompound zusätzlich mindestens ein Additiv (G).

Für eine Verbesserung der mechanische Eigenschaften von Kautschuken, insbesondere für eine Erhöhung der Bruchdehnung, der Zugfestigkeit und/oder der Weiterreißfestigkeit bei gleichzeitiger Reduktion des Druckverformungsrests (DVR), sind für das Kautschukcompound vorteilhafterweise - 100 phr des Kautschuks (A),
- eine Menge des Vernetzers (B), wobei das Verhältnis der SiH-Gruppen zu den über Hydrosilylierung vernetzbaren funktionellen Gruppen bei 0,2 bis 20 liegt, bevorzugt bei 0,5 bis 5, besonders bevorzugt bei 0,8 bis 1,2,
- 0,05 bis 100000 ppm, bevorzugt 0,1 bis 5000 ppm des Hydrosilylierungs-Katalysatorsystems (C),
- 5 bis 800 phr des zumindest einen Füllstoffs (D), für nicht magnetische Füllstoffe bevorzugt 10 bis 200 phr, für magnetische oder magnetisierbare bevorzugt 200 bis 600 phr, und
- 0,5 bis 30 phr, bevorzugt 1 bis 10 phr, des Coagens (E) eingesetzt.

In bevorzugter Ausgestaltung umfasst das Kautschukcompound zusätzlich 0,1 bis 20 phr des zumindest einen Additivs (F).

Die Abkürzung phr bedeutet parts per hundred rubber, gibt also die Gewichtsanteile pro hundert Gewichtsteile Kautschuk an.

Als bevorzugte Kautschukcompounds haben sich solche erwiesen, bei dienen der Kautschuk (A) ausgewählt ist aus Ethylen-Propylen-Dien-Kautschuk (EPDM), wobei als Dien bevorzugt ein Norbornenderivat mit einer Vinylgruppe, bevorzugt 5-Vinyl-2-norbonen, eingesetzt ist, aus Isobutylen-Isopren-Divinylbenzol-Kautschuk (IIR-Terpolymer), Isobutylen-Isopren-Kautschuk (IIR), Butadien-Kautschuk (BR), Styrol-Butadien-Kautschuk (SBR), Styrol-Isopren-Kautschuk (SIR), Isopren-Butadien-Kautschuk (IBR), Isopren-Kautschuk (IR), Acrylnitril-Butadien-Kautschuk (NBR), Chloropren-Kautschuk (CR), Acrylat-Kautschuk (ACM) oder aus teilweise hydriertem Kautschuk aus Butadien-Kautschuk (BR), Styrol-Butadien-Kautschuk (SBR), Isopren-Butadien-Kautschuk (IBR), Isopren-Kautschuk (IR), Acrylnitril-Butadien-Kautschuk (NBR), Polyisobutylen-Kautschuk (PIB) mit zwei Vinylgruppen oder aus funktionalisiertem Kautschuk, wie zum Beispiel mit Maleinsäureanhydrid oder -derivaten, oder aus mit Vinylgruppen funktionalisiertem Perfluoropolyether-Kautschuk.

Ein besonders bevorzugtes Kautschukcompound weist als Kautschuk (A) Ethylen-Propylen-Dien-Kautschuk (EPDM) mit einer Vinylgruppe im Dien oder Polyisobutylen (PIB) mit zwei endständigen Vinylgruppen auf.

Vorteilhafterweise beträgt das mittlere Molekulargewicht des Kautschuks (A) zwischen 5000 und 100000 g/mol, bevorzugt zwischen 5000 und 60000 g/mol.

Als Vernetzer (B) sind vorzugsweise eingesetzt
- eine SiH-enthaltende Verbindung der Formel (I): 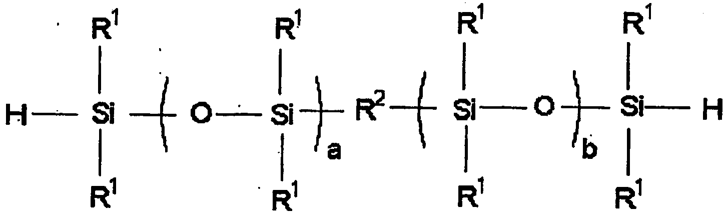 wobei R¹ für eine gesättigte Kohlenwasserstoffgruppe oder für eine aromatische Kohlenwasserstoffgruppe steht, die monovalent ist, 1 bis 10 Kohlenstoffatome hat und substituiert oder unsubstituiert ist, wobei a für ganzzahlige Werte von 0 bis 20 und b für ganzzahlige Werte von 0 bis 20 steht, sowie R² für eine divalente organische Gruppe mit 1 bis 30 Kohlenstoffatomen oder Sauerstoffatomen steht,
- eine SiH-enthaltende Verbindung der Formel (II): 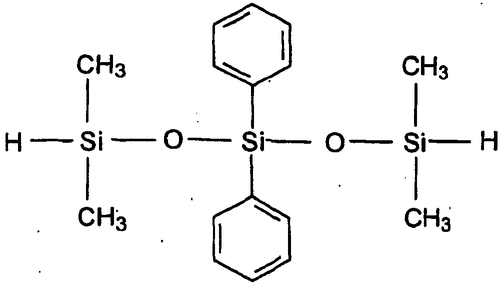 und/oder
- eine SiH-enthaltende Verbindung der Formel (III):

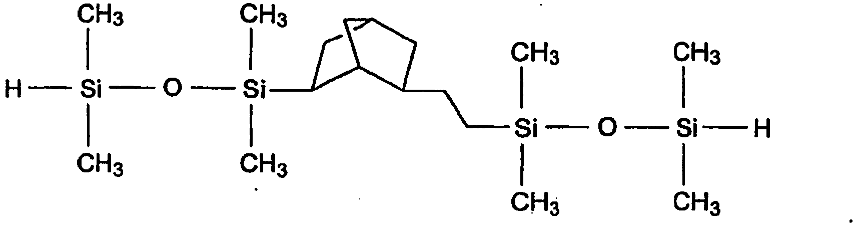

Der Vernetzer (B) ist besonders bevorzugt ausgewählt aus Poly(dimethylsiloxan-co-methylhydro-siloxan), Tris(dimethylsilyoxy)phenylsilan, Bis(dimethylsilyloxy)diphenylsilan, Polyphenyl(dimethylhydrosiloxy)-siloxan, Methylhydrosiloxanphenylmethylsiloxan-Copolymer, Methylhydrosiloxan-alkylmethylsiloxan-Copolymer, Polyalkylhydrosiloxan, Methylhydrosiloxan-diphenylsiloxanalkylmethylsiloxan-Copolymer und/oder aus Polyphenylmethylsiloxanmethylhydrosiloxan.

Poly(dimethylsiloxan-co-methylhydro-siloxan) hat sich zum Aufbau von Netzwerken für difunktionelle Vinyl-Kautschuke, wie zum Beispiel Polyisobutylen mit zwei endständigen Doppelbindungen, als besonders geeignet erwiesen.

Tris(dimethyisilyloxy)phenylsilan oder Bis(dimethylsilyloxy)diphenylsilan haben sich als besonders geeignete Vernetzer für Kautschuke mit mehr als zwei über Hydrosilylierung vernetzbare funktionelle Gruppen im Molekül gezeigt, wie zum Beispiel für Ethylen-Propylen-Dien-Kautschuk (EPDM) mit 5-Vinyl-2-norbonen als Dien.

Das Hydrosilylierungs-Katalysatorsystem (C) ist vorzugsweise ausgewählt aus Platin(0)-1,3-Divinyl-1,1,3,3,-tetramethyldisiloxan-Komplex, Hexachloroplatinsäure, Dichloro(1,5-cyclooctadien)platin(II), Dichloro(dicyclopentadienyl)platin(II), Tetrakis(triphenylphosphin)platin(0), Chloro(1,5-cyclooctadien)rhodium(I)dimer, Chlorotris(triphenylphosphin)rhodium(I) und/oder Dichloro(1,5-cyclooctadien)palladium(II), gegebenenfalls in Kombination mit einem Kinetikregler ausgewählt aus Dialkylmaleat, insbesondere Dimethylmaleat, 1,3,5,7-Tetramethyl-1,3,5,7-tetravinylcyclosiloxan, 2-Methyl-3-butin-2-ol und/oder 1-Ethinylcyclohexanol.

Der zumindest eine Füllstoff (D) ist vorteilhafterweise ausgewählt aus Ruß, insbesondere aus Fumace-, Flamm- und/oder Channel-Ruß, Kieselsäure, Metalloxid, Metallhydroxid, Carbonat, Silikat, oberflächenmodifizierter bzw. hydrophobierter, gefällter und/oder pyrogener Kieselsäure, oberflächenmodifiziertem Metalloxid, oberflächenmodifiziertem Metallhydroxid, oberflächenmodifiziertem Carbonat, wie Kreide oder Dolomit, oberflächenmodifiziertem Silikat, wie Kaolin, calciniertes Kaolin, Talkum, Quarzmehl, Kieselerde, Schichtsilikat, Glaskugeln, Fasern und/oder organischem Füllstoff, wie beispielsweise Holzmehl und/oder Cellulose.

Hydrophobierte bzw. hydrohobe Kieselsäuren lassen sich besonders gut in unpolare Kautschuke einarbeiten und bewirken eine geringere Viskositätserhöhung sowie bessere mechanische Werte als unmodifizierte Kieselsäuren.

Das Coagens (E) ist vorteilhafterweise ausgewählt aus 2,4,6-Tris(allyloxy)-1,3,5-triazin (TAC), Triallylisocyanurat (TAIC), 1,2-Polybutadien, 1,2-Polybutadienderivaten, Diacrylaten, Triacrylaten, insbesondere Trimethylpropantriacrylat, Dimethacrylaten und/oder Trimethacrylaten, insbesondere Trimethylolpropantrimethacrylat (TRIM), Triallylphosphonsäureestern und/oder Butadien-Styrol-Copolymeren mit mindestens zwei über Hydrosilylierung an den Kautschuk (A) anbindenden funktionellen Gruppen.

Als Additiv (F) finden
- Alterungsschutzmittel, beispielsweise UV-Absorber, UV-Screener, Hydroxybenzophenonderivate, Benzotriazoderivate oder Triazinderivate,
- Antioxidantien, zum Beispiel gehinderte Phenole, Lactone oder Phosphite,
- Ozonschutzmittel, zum Beispiel paraffinische Wachse,
- Flammschutzmittel,
- Hydrolyseschutzmittel, wie Carbodiimidderivate,
- Haftvermittler, wie Silane mit über Hydrosilylierung an die Kautschukmatrix anbindenden funktionellen Gruppen, zum Beispiel mit Vinyltrimethoxysilan, Vinyltriethoxysilan, mit funktionalisierten Kautschuken modifizierte Polymere, wie Maleinsäurederivate, zum Beispiel Maleinsäurueanhydrid,
- Entformungsmittel bzw. Mittel zur Reduzierung der Bauteilklebrigkeit, wie zum Beispiel Wachse, Fettsäuresalze, Polysiloxane, Polysiloxane mit über Hydrosilylierung an die Kautschukmatrix anbindenden funktionellen Gruppen und/oder
- Farbstoffe und/oder Pigmente,
- Weichmacher und/oder
- Verarbeitungshilfen
Verwendung.

Bei dem Verfahren zur Herstellung eines derartigen Kautschukcompounds werden beim Vernetzen keine Nebenprodukte erzeugt, die aufwendig entfernt werden müssen. Es werden keine Spaltprodukte freigesetzt, die migrieren können und problematisch für die Anwendungen im Brennstoffzellenbereich, sein können. Des Weiteren geschiehtdie Vernetzung mit einer vergleichsweise geringen Menge eines Hydrosilylierungs-Katalysatorsystems schneller als bei konventionellen Materialien.

Zur Herstellung des dargestellten Kautschukcompounds werden zunächst der Kautschuk (A), der zumindest eine Füllstoff (D) und das Coagens (E) und/oder das zumindest eine Additiv (F) gemischt, der Vernetzer (B) und das Hydrosilylierungs-Katalysatorsystem (C) als Einkomponentensystem oder als Zweikomponentensystem hinzugegeben sowie alle Komponenten gemischt.

Beim Einkomponentensystem erfolgt die Zugabe des Vernetzers (C) und des Hydrosilyllerungs-Katalysatorsystems (D) zu den vorgenannten übrigen Komponenten in einem System bzw. Behälter. Beim Zweikomponentensystem hingegen werden der Vernetzer (C) und das Hydrosilylierungs-Katalysatorsystem (D) getrennt voneinander, also in zwei Systemen oder Behältern, jeweils zunächst mit einem Teil einer Mischung aus den übrigen Komponenten bis zur homogenen Verteilung gemischt, bevor beide Systeme, das heißt die Mischung mit dem Vernetzer (C) und die Mischung mit dem Hydrosilylierungs-Katalysatorsystem (D), zusammengeführt werden, und alle Komponenten gemischt werden. Das Zweikomponentensystem hat den Vorteil, dass die beiden Mischungen, in denen der Vernetzer (C) und das Hydrosilylierungs-Katalysatorsystem (D) getrennt voneinander sind, länger lagerbar sind als eine Mischung, die sowohl den Vernetzer (C) als auch das Hydrosilylierungs-Katalysatorsystem (D) enthält.

Anschließend wird das Produkt durch ein Spritzguß- bzw. (Liquid)Injection-Moulding-Verfahren ((L)IM), durch Pressen bzw. ein Compression-Moulding-Verfahren (CM), durch ein Transfer-Moulding-Verfahren (TM) oder durch ein davon jeweils abgeleitetes Verfahren, ein Druckverfahren, wie zum Beispiel Siebdruck, durch Raupenauftrag, Tauchen oder Sprühen verarbeitet.

Die vorgenannten Kautschukcompounds finden Verwendung als Material im Einsatzbereich der Brennstoffzelle.

Vorzugsweise sind die Kautschukcompounds dabei als Material für Dichtungen, wie lose oder integrierte Dichtungen, wie zum Beispiel O-Ringe oder Nutringe, wie Klebedichtungen, Söftmetalldichtungen bzw. Imprägnierungen, Beschichtungen, Membranen oder Klebemassen von Schläuchen, Ventilen, Pumpen, Filtern, Befeuchtern, Reformern, Vorratsgefäßen (Tanks), Schwingungsdämpfern, für Beschichtungen von Geweben und/oder Vliesstoffen eingesetzt.

Eine besonders vorteilhafte Anwendung der Kautschukcompounds liegt in der Verwendung als Dichtung für Brennstoffzellenstacks in Form von zum Beispiel losen unprofilierten oder profilierten Dichtungen. Vorzugsweise werden die erfindungsgemäßen Kautschukcompounds auch als auf einer Bipolarplatte, einer Membran, einer Gasdiffusionsschicht oder als in einer Membran-Elektrodeneinheit integrierte unprofilierte oder profilierte Dichtungen verwendet.

### Ausführung der Erfindung

Der Gegenstand der Erfindung wird an Hand einiger Beispiele näher erläutert.

Ein Kautschuk (A), ein Füllstoff (D) sowie ein Coagens (E) werden in einem Mischer, einem SpeedMixer DAC 400 FVZ der Firma Hausschild & Co. KG, bei Temperaturen zwischen 30 und 60°C bis zu einer homogenen Verteilung der Komponenten gemischt. Anschließend werden ein Vernetzer (B) und ein Hydrosilylierungs-Katalysatorsystem (C) zugegeben, und die Mischung wird weiter bis zu einer homogenen Verteilung der Komponenten gemischt.

Aus dieser Mischung werden unter Vulkanisationsbedingungen bei 150°C beispielsweise in einer Presse 2 mm dicke Platten gepresst.

Als Kautschuk (A) wird Ethylen-Propylen-5-Vinyl-2-norbonen-Kautschuk von der Firma Mitsui Chemicals mit einem Norbonengehalt von 5,3 Gew.-% und einem mittleren Molekulargewicht von 31000 g/mol eingesetzt (Mitsui-EPDM) oder Polyisobutylen (PIB) mit zwei Vinylgruppen mit einem mittleren Molekulargewicht von 16000 g/mol von der Firma Kaneka (EPION-PIB (EP 400)).

Als Hydrosilylierungs-Vernetzer (B) für das Mitsui-EPDM wird Tris(dimethylsilyloxy)phenylsilan von der Firma Shin Etsu eingesetzt. Dieser Vernetzer ist besonders gut für Kautschuke geeignet, die mehr als zwei Vinylgruppen im Molekül haben.

Als Peroxidvemetzer für das Mitsui-EPDM wird 2,5-Dimethyl-2,5-Di(tert-Butylperoxy)-hexan von der Firma Arkema Inc. verwendet (Luperox 101 XL-45).

Als Hydrosilylierungs-Vernetzer (B) für das mit zwei Vinylgruppen endfunktionalisierte Polyisobutylen (EPION-PIB (EP400)) wird Poly(dimethylsiloxan-co-methylhydro-siloxan) von der Firma Kaneka eingesetzt (CR 300). CR 300 hat mehr als 3 SiH-Gruppen pro Molekül und ist daher zum Aufbau von Netzwerken für difunktionelle Vinyl-Kautschuke, wie das Polyisobutylen mit zwei Vinylgruppen, besonders gut geeignet.

Als Hydrosilylierungs-Katalysatorsystem (C) wird ein sogenannter Karstedt-Katalysator eingesetzt, nämlich Platin(0)-1,3-Divinyl-1,1,3,3,-tetramethyldisiloxan-Komplex, der 5%ig in Xylol gelöst und in Kombination mit Dimethylmaleat als Kinetikregler eingesetzt wird.

Als Füllstoff (D) wird hydrophobierte pyrogene Kieselsäure der Firma Degussa verwendet (Aerosil R8200). Hydrophobierte bzw. hydrohobe Kieselsäuren lassen sich besonders gut in unpolare Kautschuke einarbeiten und bewirken eine geringere Viskositätserhöhung sowie einen besseren Druckverformungsrest (DVR) im Vergleich zu nicht oberflächenmodifizierten Kieselsäuren.

Als über Hydrosilylierung vernetzbares Coagens (E) wird Triallylisocyanurat (TAIC) der Firma Nordmann, Rassmann GmbH oder 1,2-Polybutadien (Nisso-PB B-3000) der Firma Nippon Soda Co., Ltd oder Trimethylolpropantriacrylat (Saret 519) der Firma Sartomer eingesetzt.

Die Erfindung lässt sich unter Bezugnahme auf folgende Beispiele aus den Tabellen I bis IV besser verstehen.

Die Kautschukcompounds mit und ohne Coagens werden folgenden Prüfungen unterzogen:
Härte [Shore A] nach DIN 53505,
Zugfestigkeit [MPa],
Modul (Spannungswert) 100% [MPa] und
Bruchdehnung [%] nach DIN 53504-S2,
Druckverformungsrest (DVR) [%] nach DIN ISO 815,
(25% Deformation, 24h bzw. 70h, 120°C bzw. 150°C in Luft) und
Weiterreißwiderstand [N/mm] nach DIN 53507-A.

In den Tabellen Ia und Ib sind Beispiele angegeben, wobei als Kautschuk (A) Ethylen-Propylen-5-Vinyl-2-norbonen-Kautschuk von der Firma Mitsui Chemicals eingesetzt wird.

Als Hydrosilylierungs-Vernetzer (B) für das Mitsui-EPDM wird Tris(dimethylsilyloxy)phenylsilan in einer Dosierung eingesetzt, die an die vom Coagens (E) eingebrachten Doppelbindungen angepasst ist.

**Tabelle la**

| Beispiel | Hydrosilylierungs-Compound mit Coagens Nisso-PB | Hydrosilylierungs-Compound mit Coagens TAIC | Hydrosilylierungs-Compound ohne Coagens | Peroxid-Compound mit Coagens TAIC | Peroxid-Compound ohne Coagens |
|---|---|---|---|---|---|
| Kautschuk (A): **Mitsui-EPDM** [phr] | 100 | 100 | 100 | 100 | 100 |
| **Hydrosilylierungs-Vernetzer (B):** Tris(dimethylsilyloxy) phenylsilan [phr] | 5 | 6 | 4 | | |
| **Peroxid-Vernetzer** **[phr]** | | | | 4 | 4 |
| Kat.-System (C): ≈ 450 ppm Kat./ Regler [µl] | 56/ 36 | 56/ 36 | 56/ 36 | | |
| Füllstoff (D): Aerosil R8200 [phr] | 20 | 20 | 20 | 20 | 20 |
| **Coagens (E): [phr]** **TAIC** **Nisso-PB B-3000** | 1 | 2 | | 2 | |
| Härte [Shore A] | 40 | 46 | 38 | 52 | 46 |
| Zugfestigkeit [MPa] | 1,6 | 1,5 | 1,4 | 2 | 1,5 |
| Modul 100% [MPa] | 0,9 | 1,3 | 1 | | 1,3 |
| **Bruchdehnung [%]** | **153** | **115** | 129 | **83** | 109 |
| Weiterreißwiderstand [N/mm] | 0,9 | 0,6 | 0,7 | | |
| DVR 120°C, 24h [%] | 20 | 10 | 25 | 9 | 11 |

Wie bekannt, können bei der Vernetzung von EPDM mit Peroxiden eine Reihe von Nebenreaktionen auftreten, die teilweise durch den Einsatz von Coagenzien unterdrückt werden können.

Auch wirkt sich die Zugabe von Coagens, wie zum Beispiel 1,2-Polybutadien (Nisso-PB B-3000) oder Triallylisocyanurat (TAIC) bei einer Peroxidvernetzung von Mitsui-EPDM durch eine Zunahme der Vernetzungsdichte in der Zunahme der Härte und in der Abnahme des Druckverformungsrests (DVR) aus, aber auch in einer unerwünschten Abnahme der Bruchdehnung.

Bei über Hydrosilylierung vernetztem Mitsui-EPDM wirkt sich die Zugabe des Coagens 1,2-Polybutadien (Nisso-PB B-3000) oder Triallylisocyanurat (TAIC) durch eine Zunahme der Vernetzungsdichte in der Zunahme der Härte und in der Zunahme der Zugfestigkeit aus. Die Zugabe eines Coagens (E) wirkt sich zudem in einer deutlichen Herabsetzung einer bleibenden Verformung des Kautschuks unter Last aus, also in der Abnahme des Druckverformungsrestwertes (DVR).

Überraschenderweise nimmt die Bruchdehnung bei über Hydrosilylierung vernetztem Mitsui-EPDM im Gegensatz zum Mitsui-EPDM mit Peroxidvernetzung insbesondere bei Zugabe von 1,2-Polybutadien (Nisso-PB B-3000) als Coagens zu. Dieser positive Effekt eröffnet verbesserte Einsatzmöglichkeiten dieses Kautschukcompounds in zahlreichen Anwendungsgebieten.

Ganz besonders wird die Bruchdehnung auch bei der Zugabe von Diacrylaten erhöht, beispielsweise von 1,6-Hexandioldiacrylat (SR 238) der Firma Sartomer, wie in der Tabelle Ib gezeigt.

**Tabelle Ib**

| Beispiel | Hydrosiylierungs-Compound mit Coagens (**SR 238**) | Hydrosilylierungs-Compound ohne Coagens |
|---|---|---|
| Kautschuk (A): **Mitsui-EPDM** [phr] | 100 | 100 |
| **Hydrosilylierungs-Vernetzer (B):** **CR 300 [phr]** | 4 | 4 |
| Kat.-System (C): Kat./ Regler [phr]/[µl] Dimethylmaleat | 0,2 / 35 | 0,2 / 35 |
| Füllstoff (D): Aerosil R8200 [phr] | 20 | 20 |
| **Coagens (E): [phr]** **1,6 Hexandioldiacrylat (SR 238)** | 1 | |
| Härte [Shore A] | 32 | 38 |
| Zugfestigkeit [MPa] | 1,7 | 1,4 |
| Modul 100% [MPa] | 0,9 | 1 |
| **Bruchdehnung [%]** | 162 | 129 |
| DVR 120°C, 24h [%] | 18 | 25 |
| DVR 120°C, 70h [%] | 26 | 40 |

In Tabelle Ila sind Beispiele angegeben, wobei als Kautschuk (A) Polyisobutylen (PIB) mit zwei Vinylgruppen von der Firma Kaneka eingesetzt wird (EPION-PIB (EP400)).

Als Hydrosilylierungs-Vernetzer (B) für das mit zwei Vinylgruppen endfunktionalisierte Polyisobutylen (EPION-PIB (EP400)) wird Poly(dimethylsiloxan-co-methylhydro-siloxan) von der Firma Kaneka (CR 300) in einer Dosierung eingesetzt, die an die vom Coagens (E) eingebrachten Doppelbindungen angepasst ist.

**Tabelle IIa**

| Beispiel | Hydrosilylierungs-Compound mit Coagens Saret 519 | Hydrosilylierungs-Compound mit Coagens Saret 519 | Hydrosilylierungs-Compound ohne Coagens |
|---|---|---|---|
| Kautschuk (A): | | | |
| **EPION-PIB (EP400)** [phr] | 100 | 100 | 100 |
| Vernetzer (B): CR-300 [phr] | 6,5 | 8 | 4 |
| Kat.-System (C): | | | |
| ≈ 450 ppm HS-KA Kat./ Regler [µl] | 56/ 36 | 56/ 36 | 56/ 36 |
| Füllstoff (D): | 20 | 20 | 20 |
| Aerosil R8200 [phr] | | | |
| **Coagens (E):** | | | |
| **Saret 519 [phr]** | **2** | **2** | |
| Härte [Shore A] | 29 | 35 | 35 |
| Zugfestigkeit [MPa] | 2,7 | 2,9 | 2,6 |
| Modul 100% [MPa] | 0,6 | 0,7 | 0,7 |
| **Bruchdehnung [%]** | **328** | **299** | **261** |
| Weiterreißwiderstand [N/mm] | 2,5 | 2,3 | 2 |
| DVR 120°C, 24h [%] | 31 | 28 | 33 |

Bei über Hydrosilylierung vernetztem Polyisobutylen mit zwei Vinylgruppen (EPION-PIB (EP400)) wirkt sich die Zugabe von Trimethylolpropantriacrylat (Saret 519) als Coagens (E) in zunehmender Zugfestigkeit und in einer Abnahme des Druckverformungsrests (DVR) bei 120°C aus.

Überraschenderweise nimmt die Bruchdehnung bei über Hydrosilylierung vernetztem Polyisobutylen mit zwei Vinylgruppen (EPION-PIB (EP400)) bei Zugabe des Coagens (E) zu. Auch der Weiterreißwiderstand ist bei Zugabe des Coagens (E) erhöht.

**Tabelle IIb**

| Beispiel | Hydrosilylierungs-Compound mit Coagens **Nisso-PB B-3000** | Hydrosilylierungs-Compound mit Coagens **TAIC** | Hydrosilylierungs-Compound ohne Coagens |
|---|---|---|---|
| Kautschuk (A): | | | |
| **EPION-PIB (EP400)** [phr] | 100 | 100 | 100 |
| Vernetzer (B): CR-300 [phr] | 8,5 | 8,5 | 4 |
| Kat.-System (C): | | | |
| Kat./ Regler [phr]/[µl] Dimethylmaleat | 0,2 / 35 | 0,2 / 35 | 0.2 / 35 |
| Füllstoff (D): | 20 | 20 | 20 |
| Aerosil R8200 [phr] | | | |
| **Coagens (E): [phr]** **Nisso-PB B-3000** **TAIC** | 1 | 1 | |
| Härte [Shore A] | 32 | 37 | 35 |
| Zugfestigkeit [MPa] | 3,4 | 3,2 | 2,6 |
| Modul 100% [MPa] | 0,6 | 0,8 | 0,7 |
| **Bruchdehnung [%]** | 359 | 270 | 261 |
| DVR 120°C, 24h [%] | 55 | 30 | 33 |
| DVR 120°C, 70h [%] | 70 | 35 | |

In Tabelle IIb ist gezeigt, wie sich die Zugabe des Coagens 1,2-Polybutadien (Nisso-PB B-3000) bzw. Triallylisocyanurat (TAIC) auf verschiedene mechanische Eigenschaften auswirkt.

Auch bei Zugabe dieser Coagenzien (E) weist das Hydrosilylierungs-Compound mit Polyisobutylen erhöhte Zugfestigkeitswerte auf und genauso wie bei Zugabe von Trimethylolpropantriacrylat (Saret 519) überraschenderweise erhöhte Bruchdehnungseigenschaften.

Insbesondere durch die Zugabe von Acrylat und Triallylisocyanurat (TAIC) lassen sich auch die Druckvertormungsrestwerte nach 24 Stunden bei 120°C in Luft herabsetzen.

**Tabelle III**

| Beispiel | Hydrosilylierungs-Compound mit Coagens **TAC** | Hydrosilylierungs-Compound mit Coagens **Nisso.PB B-3000** | Hydrosilylierungs-Compound ohne Coagens |
|---|---|---|---|
| Kautschuk (A): | | | |
| Perbunan-**NBR** [phr] | 100 | 100 | 100 |
| Vernetzer (B): CR-300 [phr] | 10 | 10 | 10 |
| Kat.-System (C): | | | |
| Kat./ Regler [phr]/[µl] | 0,2 / 0,04 | 0,2 / 0,04 | 0,2 / 0,04 |
| Füllstoff (D): | | | |
| Aerosil R8200 [phr] | 60 | 60 | 60 |
| **Coagens (E) [phr]:** | | | |
| **TAIC** **Nisso-PB B-3000** | **2,5** | **2,5** | |
| Härte [Shore A] | 76 | 78 | 75 |
| Zugfestigkeit [MPa] | 9,2 | 8,7 | 6,2 |
| Modul 100% [MPa] | 4,4 | 7,7 | 2,9 |
| Modul 200% [MPa] | 8,4 | | 5,2 |
| Bruchdehnung [%] | 228 | 116 | 236 |
| Weiterreißwiderstand [N/mm] | 12,2 | 11,7 | 10 |
| DVR 120°C, 24h [%] | 20 | 21 | 18 |

In den in Tabelle III aufgeführten Beispielen wird als Kautschuk (A) fester Acrylnitril-Butadien-Kautschuk (NBR) von der Firma Lanxess eingesetzt (Perbunan 2845 F).

Die Daten der Tabelle III zeigen neben dem Kautschuk (A) ohne Coagens und mit Coagens (E), beispielhaft an der Verwendung des Coagens Triallylisocyanurat (TAIC) bzw. 1,2-Polybutadien (Nisso-PB B-3000), wie sich die Zugabe eines über Hydrosilylierung vernetzbaren Coagens (E) auf die mechanischen Eigenschaften auswirkt.

Die Härtewerte werden dabei durch die Zugabe eines Coagens (E) erhöht ebenso wie die Zugfestigkeitswerte. Gleiches gilt für den Weiterreißwiderstand bei Zugabe des Coagens (E).

Dabei zeigen die Hydrosilylierungscompounds mit dem Coagens Triallylisocyanurat (TAIC) im Vergleich zu denen mit dem Coagens 1,2-Polybutadien (Nisso-PB B-3000) sogar noch etwas stärkere Zugfestigkeits-, Bruchdehnungs- und Weiterreißwiderstandswerte sowie einen etwas niedrigeren Druckverformungsrestwert.

Ferner zeigen die in Tabelle IV aufgeführten Messdaten der Versuchsbeispiele von Hydrosilylierungscompounds mit Acrylat-Kautschuk (ACM OR 100 A) der Firma Kaneka als Kautschuk (A) ohne Coagens und mit Coagens (E), beispielhaft unter Verwendung des Coagens Triallylisocyanurat (TAIC), Triacrylat (Saret 519) bzw. 1,2-Polybutadien (Nisso-PB B-3000), wie sich die Zugabe eines über Hydrosilylierung vernetzbaren Coagens (E) auf die mechanischen Eigenschaften auswirkt.

**Tabelle IV**

| Beispiel Hydrosilylierungs-Compound | mitCoagens **TAIC** | mit Coagens **TAIC** | mitCoagens **Saret 519** | mitCoagens **Saret 519** | mitCoagens **Nisso-PB B-3000** | ohne Coagens |
|---|---|---|---|---|---|---|
| Kautschuk (A): | | | | | | |
| ACM [phr] | 100 | 100 | 100 | 100 | 100 | 100 |
| **Vernetzer (B):** | **15,5** | **17** | **12** | **14** | **12** | **6** |
| **CR-500 [phr]** | | | | | | |
| Kat.-System (C): | | | | | | |
| Pt-VTSc/ Dimethylmaleat Kat./ Regler [µl]/ [µl] | 47/ 32 | 47/ 32 | 47/ 32 | 47/ 32 | 47/ 32 | 47/ 32 |
| Füllstoff (D): | | | | | | |
| Aerosil R8200 [phr] | 30 | 30 | 30 | 30 | 30 | 30 |
| **Coagens (E):** | | | | | | |
| **TAIC** **Saret 519** **Nisso-PB B-3000** | **2** | **2** | **2** | **2** | **2** | |
| Additiv (F): [phr] ASM Anox 20 (BASF) | 1 | 1 | 1 | 1 | 1 | 1 |
| Dichte [g/cm³] DIN EN ISO 1183 | 1,23 | 1,23 | 1,24 | 1,23 | 1,24 | 1,21 |
| Härte [Shore A] | 33 | 36 | 25 | 30 | 27 | 22 |
| Zugfestigkeit [MPa] | 3,4 | 4,1 | 3 | 3,3 | 3,1 | 2,4 |
| Bruchdehnung [%] | 167 | 164 | 240 | 215 | 220 | 224 |
| DVR 150°C, 70h [%] | 23 | 9 | 36 | 19 | 50 | 41 |

Die Härtewerte werden dabei durch die Zugabe eines Coagens (E) erhöht ebenso wie die Zugfestigkeitswerte. Hervorzuheben ist die Verbesserung des Druckverformungsrestwertes nach 70 Stunden bei 150°C durch Zugabe eines Coagens aus der Gruppe der Acrylate, wie an dem Triacrylat (Saret 519) gezeigt, und ganz besonders bei Zugabe des Coagens Triallylisocyanurat (TAIC).

Aus den in den Tabellen angegebenen Beispielen ist ersichtlich, dass die Kautschukcompounds, die als Kautschuk (A) insbesondere Ethylen-Propylen-Dien-Kautschuk (EPDM), Polyisobutylen (PIB), Acrylnitril-Butadien-Kautschuk (NBR) oder Acrylat-Kautschuk (ACM) und als Coagens (E) Triallylisocyanurat (TAIC), 1,2-Polybutadien, Triacrylate (Saret 519) oder Diacrylate, wie beispielsweise, 1,6-Hexandioldiacrylat (SR 238) umfassen, besonders vorteilhafte mechanische Eigenschaften aufweisen.

Hydrosilylierungscompounds, die als Coagenzien 1,2-Polybutadien enthalten oder Ethergruppen, haben tendenziell etwas schlechtere mechanische Eigenschaften, insbesondere bezüglich der thermischen Alterung, was beispielsweise aus den Druckverformungsresten bei 120°C und höheren Temperaturen sichtbar ist.

## Patentansprüche

1. Verwendung eines Kautschukcompounds als Material im Einsatzbereich der Brennstoffzelle, wobei das Kautschukcompound
einen Kautschuk (A) mit mindestens zwei über Hydrosilylierung vernetzbaren funktionellen Gruppen,
als Vernetzer (B) ein Hydrosiloxan oder Hydrosiloxanderivat oder ein Gemisch aus mehreren Hydrosiloxanen oder -derivaten, die im Mittel mindestens zwei SiH-Gruppen pro Molekül aufweisen,
ein Hydrosilylierungs-Katalysatorsystem (C),
mindestens einen Füllstoff (D) und
ein über Hydrosilylierung vernetzbares Coagens (E) umfasst.

2. Verwendung nach Anspruch 1, wobei das Kautschukcompound zusätzlich
mindestens ein Additiv (F) aufweist.

3. Verwendung nach Anspruch 1 oder 2, wobei das Kautschukcompound
- 100 phr des Kautschuks (A),
- eine Menge des Vernetzers (B), wobei das Verhältnis der SiH-Gruppen zu den über Hydrosilylierung vernetzbaren funktionellen Gruppen bei 0,2 bis 20 liegt, bevorzugt bei 0,5 bis 5, besonders bevorzugt bei 0,8 bis 1,2,
- 0,05 bis 100000 ppm, bevorzugt 0,1 bis 5000 ppm des Hydrosilylierungs-Katalysatorsystems (C),
- 5 bis 800 phr des zumindest einen Füllstoffs (D), für nicht magnetische Füllstoffe bevorzugt 10 bis 200 phr, für magnetische oder magnetisierbare bevorzugt 200 bis 600 phr und
- 0,5 bis 30 phr, bevorzugt 1 bis 10 phr, des Coagens (E) umfasst.

4. Verwendung nach Anspruch 2 oder 3, wobei das Kautschukcompound 0,1 bis 20 phr des zumindest einen Additivs (F) umfasst.

5. Verwendung nach einem der vorhergehenden Ansprüche, wobei der Kautschuk (A) ausgewählt ist aus
Ethylen-Propylen-Dien-Kautschuk (EPDM), wobei als Dien bevorzugt ein Norbornenderivat mit einer Vinylgruppe, bevorzugt 5-Vinyl-2-norbonen, eingesetzt ist, aus
Isobutylen-Isopren-Divinylbenzol-Kautschuk (IIR-Terpolymer), Isobutylen-Isopren-Kautschuk (IIR), Butadien-Kautschuk (BR), Styrol-Butadien-Kautschuk (SBR), Styrol-Isopren-Kautschuk (SIR), Isopren-Butadien-Kautschuk (IBR), Isopren-Kautschuk (IR), Acrylnitril-Butadien-Kautschuk (NBR), Chloropren-Kautschuk (CR), Acrylat-Kautschuk (ACM) oder aus teilweise hydriertem Kautschuk aus Butadien-Kautschuk (BR), Styrol-Butadien-Kautschuk (SBR), lsopren-Butadien-Kautschuk (IBR), Isopren-Kautschuk (IR), Acrylnitril-Butadien-Kautschuk (NBR), Polyisobutylen-Kautschuk (PIB) mit zwei Vinylgruppen oder aus funktionalisiertem Kautschuk, wie zum Beispiel mit Maleinsäureanhydrid oder -derivaten, oder aus mit Vinylgruppen funktionalisiertem Perfluoropolyether-Kautschuk.

6. Verwendung nach einem der vorhergehenden Ansprüche, wobei das mittlere Molekulargewicht des Kautschuks (A) zwischen 5000 und 100000 g/mol, bevorzugt zwischen 5000 und 60000 g/mol beträgt.

7. Verwendung nach einem der vorhergehenden Ansprüche, wobei der Vernetzer (B) ausgewählt ist aus
- einer SiH-enthaltenden Verbindung der Formel (I): 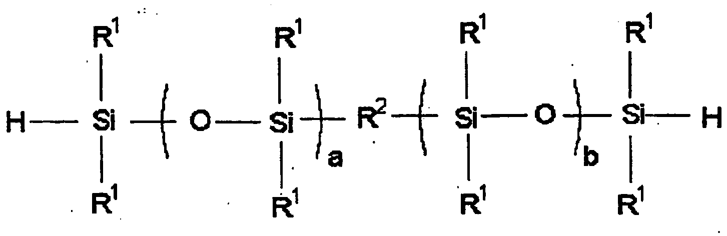 wobei R¹ für eine gesättigte Kohlenwasserstoffgruppe oder für eine aromatische Kohlenwasserstoffgruppe steht, die monovalent ist, 1 bis 10 Kohlenstoffatome hat und substituiert oder unsubstituiert ist, wobei a für ganzzahlige Werte von 0 bis 20 und b für ganzzahlige Werte von 0 bis 20 steht, sowie R² für eine divalente organische Gruppe mit 1 bis 30 Kohlenstoffatomen oder Sauerstoffatomen steht,
- einer SiH-enthaltenden Verbindung der Formel (II):

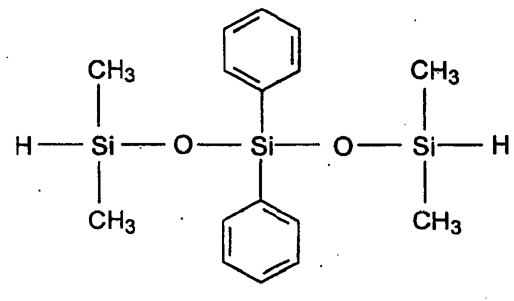

8. Verwendung nach einem der vorhergehenden Ansprüche, wobei das Hydrosilylierungs-Katalysatorsystem (C) ausgewählt ist aus Hexachloroplatinsäure, Platin(0)-1,3-Divinyl-1,1,3,3,-tetramethyldisiloxan-Komplex, Dichloro(1,5-cyclooctadien)platin(II), Dichloro(dicyclopentadienyl)platin(II), Tetrakis(triphenylphosphin)platin(0), Chloro(1,5-cyclooctadien)rhodium(I)dimer, Chlorotris(triphenylphosphin)rhodium(I) und/oder Dichloro(1,5-cyclooctadien)palladium(II) gegebenenfalls in Kombination mit einem Kinetikregler ausgewählt aus Dialkylmaleat, insbesondere Dimethylmaleat, 1,3,5,7-Tetramethyl-1,3,5,7-tetravinylcyclosiloxan, 2-Methyl-3-butin-2-ol und/oder 1-Ethinylcyclohexanol.

9. Verwendung nach einem der vorhergehenden Ansprüche, wobei der zumindest eine Füllstoff (D) ausgewählt ist aus Ruß, Graphit, Kieselsäure, Silikat, Metalloxid, Metallhydroxid, Carbonat, Glaskugeln, Fasern und/oder organischem Füllstoff.

10. Verwendung nach einem der vorhergehenden Ansprüche, wobei das Coagens (E) ausgewählt ist aus 2,4,6-Tris(allyloxy)-1,3,5-triazin (TAC), Triallylisocyanurat (TAIC), 1,2-Polybutadien, 1,2-Polybutadienderivaten, Diacrylaten, Triacrylaten, insbesondere Trimethylpropantriacrylat, Dimethacrylaten und/oder Trimethacrylaten, insbesondere Trimäthylolpropantrimethacrylat (TRIM), Triallylphosphonsäureestern und/oder Butadien-Styrol-Copolymeren mit mindestens zwei über Hydrosilylierung an den Kautschuk (A) anbindenden funktionellen Gruppen.

11. Verwendung nach einem der Ansprüche 2 bis 10, wobei das zumindest eine Additiv (F) ausgewählt ist aus Alterungsschutzmitteln, Antioxidantien, Ozonschutzmitteln, Flammschutzmitteln, Hydrolyseschutzmitteln, Haftvermittlern, Entformungsmitteln bzw. Mitteln zur Reduzierung der Bauteilklebrigkeit, Farbstoffen und/oder Pigmenten, Weichmachern und/oder Verarbeitungshilfen.

12. Verwendung nach einem der Ansprüche 1 bis 11 als Material von Dichtungen bzw. Imprägnierungen, Beschichtungen, Membranen oder Klebemassen von Schläuchen Ventilen, Pumpen, Filtern, Befeuchtern, Reformern, Vorratsgefäßen (Tanks), Schwingungsdämpfern, für Beschichtungen von Geweben und/oder Vliesstoffen.

## Claims

1. Use of a compounded rubber material as material in the field of use of the fuel cell, where the compounded rubber material
comprises a rubber (A) having at least two functional groups crosslinkable by way of hydrosilylation,
as crosslinking agent (B), a hydrosiloxane or hydrosiloxane derivative or a mixture of a plurality of hydrosiloxanes or of hydrosiloxane derivatives, which have an average of at least two SiH groups per molecule,
a hydrosilylation catalyst system (C),
at least one filler (D) and
a coagent (E) crosslinkable by way of hydrosilylation.

2. Use according to Claim 1, where the compounded rubber material also
comprises at least one additive (F).

3. Use according to Claim 1 or 2, where the compounded rubber material comprises
- 100 phr of the rubber (A),
- an amount of the crosslinking agent (B) where the ratio of the SiH groups to the functional groups crosslinkable by way of hydrosilylation is from 0.2 to 20, preferably from 0.5 to 5, particularly preferably from 0.8 to 1.2,
- from 0.05 to 100 000 ppm, preferably from 0.1 to 5000 ppm, of the hydrosilylation catalyst system (C),
- from 5 to 800 phr of the at least one filler (D), for non-magnetic fillers preferably from 10 to 200 phr, for magnetic or magnetisable fillers preferably from 200 to 600 phr and
- from 0.5 to 30 phr, preferably from 1 to 10 phr, of the coagent (E).

4. Use according to Claim 2 or 3, where the compounded rubber material comprises from 0.1 to 20 phr of the at least one additive (F).

5. Use according to any of the preceding claims, where the rubber (A) is one selected from ethylene-propylene-diene rubber (EPDM), where diene used preferably comprises a norbornene derivative having a vinyl group, preferably 5-vinyl-2-norbornene, from isobutylene-isoprene-divinylbenzene rubber (IIR terpolymer), isobutylene-isoprene rubber (IIR), butadiene rubber (BR), styrene-butadiene rubber (SBR), styrene-isoprene rubber (SIR), isoprene-butadiene rubber (IBR), isoprene rubber (IR), acrylonitrile-butadiene rubber (NBR), chloroprene rubber (CR), acrylate rubber (ACM), or from partially hydrogenated rubber from butadiene rubber (BR), styrene-butadiene rubber (SBR), isoprene-butadiene rubber (IBR), isoprene rubber (IR), acrylonitrile-butadiene rubber (NBR), polyisobutylene rubber (PIB) having two vinyl groups or from functionalized rubber, for example perfluoropolyether rubber functionalized with maleic anhydride or with maleic anhydride derivatives or functionalized with vinyl groups.

6. Use according to any of the preceding claims, where the average molar mass of the rubber (A) is from 5000 to 100 000 g/mol, preferably from 5000 to 60 000 g/mol.

7. Use according to any of the preceding claims, where the crosslinking agent (B) is one selected from
- an SiH-containing compound of the formula (I): 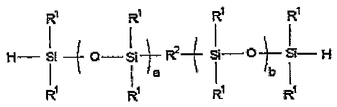 where R¹ is a saturated hydrocarbon group or an aromatic hydrocarbon group which is monovalent, has from 1 to 10 carbon atoms and is substituted or unsubstituted, where a is integers from 0 to 20 and b is integers from 0 to 20, and R² is a divalent organic group having from 1 to 30 carbon atoms or oxygen atoms,
- an SiH-containing compound of the formula (II):

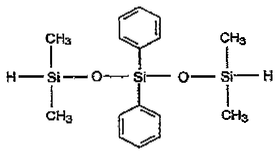

8. Use according to any of the preceding claims, where the hydrosilylation catalyst system (C) is one selected from hexachloroplatinic acid, 1,3-divinyl-1,1,3,3-tetramethyldisiloxane complex of platinum(0), dichloro(1,5-cyclooctadiene)platinum(II), dichloro(dicyclopentadienyl)platinum(II), tetrakis(triphenylphosphine)platinum(0), chloro(1,5-cyclooctadiene) rhodium(I) dimer, chlorotris (triphenylphosphine) rhodium(I) and/or dichloro (1,5-cyclooctadiene) palladium(II) optionally in combination with a kinetic regulator selected from dialkyl maleate, in particular dimethyl maleate, 1,3,5,7-tetramethyl-1,3,5,7-tetravinylcyclosiloxane, 2-methyl-3-butyn-2-ol and/or 1-ethynylcyclohexanol.

9. Use according to any of the preceding claims, where the at least one filler (D) is one selected from carbon black, graphite, silica, silicate, metal oxide, metal hydroxide, carbonate, glass beads, fibres and/or organic filler.

10. Use according to any of the preceding claims, where the coagent (E) is one selected from 2,4,6-tris(allyloxy)-1,3,5-triazine (TAC), triallyl isocyanurate (TAIC), 1,2-polybutadiene, 1,2-polybutadiene derivatives, diacrylates, triacrylates, in particular trimethylpropane triacrylate, dimethacrylates and/or trimethacrylates, in particular trimethylolpropane trimethacrylate (TRIM), triallylphosphonic esters and/or butadiene-styrene copolymers having at least two functional groups that link to the rubber (A) by way of hydrosilylation.

11. Use according to any of Claims 2 to 10, where the at least one additive (F) is one selected from antiageing agents, antioxidants, antiozonants, flame retardants, hydrolysis stabilizers, adhesion promoters, mould-release agents and agents for reducing component tack, dyes and/or pigments, plasticizers and/or processing aids.

12. Use according to any of Claims 1 to 11 as material of gaskets or impregnation systems, coatings, membranes or adhesive masses of hoses, valves, pumps, filters, humidifiers, reformers, tanks, or vibration dampers, or for coatings of textiles and/or of non-woven fabrics.

## Revendications

1. Utilisation d'un compound de caoutchouc comme matériau dans le domaine des piles à combustible, le compound de caoutchouc comprenant un caoutchouc (A) présentant au moins deux groupes fonctionnels réticulables par hydrosilylation,
comme réticulant (B) un hydrosiloxane ou un dérivé d'hydrosiloxane ou un mélange de plusieurs hydrosiloxanes ou de leurs dérivés, qui présentent en moyenne au moins deux groupes SiH par molécule, un système catalytique d'hydrosilylation (C), au moins une charge (D) et un co-agent (E) réticulable par hydrosilylation.

2. Utilisation selon la revendication 1, le compound de caoutchouc présentant en outre au moins un additif (F).

3. Utilisation selon la revendication 1 ou 2, le compound de caoutchouc comprenant
- 100 phr de caoutchouc (A),
- une quantité de réticulant (B), le rapport des groupes SiH aux groupes fonctionnels réticulables par hydrosilylation valant 0,2 à 20, de préférence 0,5 à 5, de manière particulièrement préférée 0,8 à 1,2,
- 0,05 à 100 000 ppm, de préférence 0,1 à 5000 ppm du système catalytique d'hydrosilylation (C),
- 5 à 800 phr d'au moins une charge (D), pour des charges non magnétiques de préférence 10 à 200 phr,
pour des charges magnétiques ou magnétisables de préférence 200 à 600 phr et
- 0,5 à 30 phr, de préférence 1 à 10 phr, du co-agent (E).

4. Utilisation selon la revendication 2 ou 3, le compound de caoutchouc comprenant 0,1 à 20 phr dudit au moins un additif (F).

5. Utilisation selon l'une quelconque des revendications précédentes, le caoutchouc (A) étant choisi parmi
le caoutchouc d'éthylène-propylène-diène (EPDM), en utilisant comme diène de préférence un dérivé de norbornène présentant un groupe vinyle, de préférence le 5-vinyl-2-norbornène,
le caoutchouc d'isobutylène-isoprène-divinylbenzène (terpolymère IIR), le caoutchouc d'isobutylène-isoprène (IIR), le caoutchouc de butadiène (BR), le caoutchouc de styrène-butadiène (SBR), le caoutchouc de styrène-isoprène (SIR), le caoutchouc d'isoprène-butadiène (IBR), le caoutchouc d'isoprène (IR), le caoutchouc d'acrylonitrile-butadiène (NBR), le caoutchouc de chloroprène (CR), le caoutchouc d'acrylate (ACM) ou parmi le caoutchouc partiellement hydrogéné de caoutchouc de butadiène (BR), de caoutchouc de styrène-butadiène (SBR), de caoutchouc d'isoprène-butadiène (IBR), de caoutchouc d'isoprène (IR), de caoutchouc d'acrylonitrile-butadiène (NBR), de caoutchouc de polyisobutylène (PIB) présentant deux groupes vinyle ou parmi le caoutchouc fonctionnalisé, tel que par exemple par de l'anhydride de l'acide maléique ou ses dérivés, ou parmi le caoutchouc de perfluoropolyéther fonctionnalisé par des groupes vinyle.

6. Utilisation selon l'une quelconque des revendications précédentes, le poids moléculaire moyen du caoutchouc (A) étant situé entre 5000 et 100 000 g/mole, de préférence entre 5000 et 60 000 g/mole.

7. Utilisation selon l'une quelconque des revendications précédentes, le réticulant (B) étant choisi parmi
- un composé contenant SiH de formule (I) : 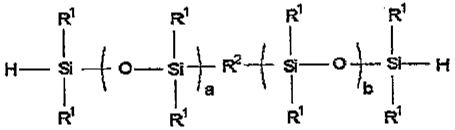 R¹ représentant un groupe hydrocarboné saturé ou un groupe hydrocarboné aromatique, qui est monovalent, qui présente 1 à 10 atomes de carbone et qui est substitué ou non substitué, a représentant des nombres entiers de 0 à 20 et b des nombres entiers de 0 à 20, R² représentant un groupe organique divalent comprenant 1 à 30 atomes de carbone ou des atomes d'oxygène,
- un composé contenant SiH de formule (II) :

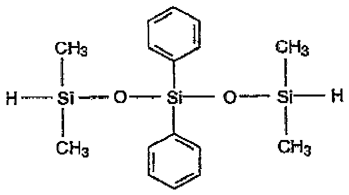

8. Utilisation selon l'une quelconque des revendications précédentes, le système catalytique d'hydrosilylation (C) étant choisi parmi l'acide hexachloroplatinique, le complexe platine(0)-1,3-divinyl-1,1,3,3,-tétraméthyldisiloxane, le dichloro(1,5-cyclooctadiène)-platine(II), le dichloro (dicyclopentadiényl) -platine(II), le tétrakis (triphénylphosphine) -platine(0), le dimère de chloro(1,5-cyclooctadiène)-rhodium(I), le chlorotris (triphénylphosphine) -rhodium(I), et/ou le dichloro (1,5-Cyclooctadiène) -palladium(II), le cas échéant en combinaison avec un régulateur de la cinétique choisi parmi le maléate de dialkyle, en particulier le maléate de diméthyle, le 1,3,5,7-tétraméthyl-1,3,5,7-tétravinylcyclosiloxane, le 2-méthyl-3-butyn-2-ol et/ou le 1-éthynylcyclohexanol.

9. Utilisation selon l'une quelconque des revendications précédentes, ladite au moins une charge (D) étant choisie parmi une suie, le graphite, une silice, un silicate, un oxyde de métal, un hydroxyde de métal, un carbonate, des billes de verre, des fibres et/ou une charge organique.

10. Utilisation selon l'une quelconque des revendications précédentes, le co-agent (E) étant choisi parmi la 2,4,6-tris (allyloxy) -1,3,5-triazine (TAC), le triallylisocyanurate (TAIC), le 1,2-polybutadiène, les dérivés de 1,2-polybutadiène, les diacrylates, les triacrylates, en particulier le triacrylate de triméthylpropane, les diméthacrylates et/ou les triméthacrylates, en particulier le triméthacrylate de triméthylolpropane (TRIM), les esters de l'acide triallylphosphonique et/ou les copolymères de butadiène-styrène présentant au moins deux groupes fonctionnels se liant par hydrosilylation au caoutchouc (A).

11. Utilisation selon l'une quelconque des revendications 2 à 10, ledit au moins un additif (F) étant choisi parmi les agents de protection contre le vieillissement, les antioxydants, les agents de protection contre l'ozone, les agents ignifuges, les agents de protection contre l'hydrolyse, les promoteurs d'adhérence, les agents de démoulage ou, selon le cas, les agents pour la réduction de l'adhésivité des pièces, les colorants et/ou les pigments, les plastifiants et/ou les adjuvants de transformation.

12. Utilisation selon l'une quelconque des revendications 1 à 11 comme matériau pour des joints ou, selon le cas, des imprégnations, des revêtements, des membranes ou des masses adhésives de flexibles, de soupapes, de pompes, de filtres, d'humidificateurs, de reformeurs, de réservoirs (citernes), d'amortisseurs, pour des revêtements de tissus et/ou de non-tissés.
